# EUROPÄISCHE PATENTANMELDUNG

(11) **EP 1 591 509 A1**
(43) Veröffentlichungstag der Anmeldung: **02.11.2005**
(21) Anmeldenummer: 05009335.0
(22) Anmeldetag: 28.04.2005
(51) Int. Cl.: C09K 3/18, C09D 5/16, B08B 17/06, C09C 3/06

(54) **Beschichtungsmaterial**

(30) Priorität: 28.04.2004 DE 102004020961
(71) Anmelder: Sanner, Lutz P., 40474 Düsseldorf (DE)
(72) Erfinder: Sanner, Lutz P., 40474 Düsseldorf (DE)
(74) Vertreter: Stenger, Watzke & Ring

(57) **Zusammenfassung**

Die Erfindung betrifft ein Beschichtungsmaterial mit einem Basisfluid, in dem Körperelemente dispergiert sind, wobei die Oberfläche der Körperelemente mit Nanopartikeln besetzt ist.

## Beschreibung

Die vorliegende Erfindung betrifft ein Beschichtungsmaterial mit einem Basisfluid, in dem Körperelemente dispergiert sind.

Es ist im Stand der Technik bekannt, Beschichtungsmaterialien insbesondere auf dem Gebiet der Farben und Anstriche so herzustellen, daß sie auf den jeweiligen Anwendungsfall optimierte Eigenschaften aufweisen. Beispielhaft zu nennen sind hier wasserdampfdurchlässige, abwaschbare temperaturbeständige oder säurebeständige Farben.

Es sind Beschichtungsmaterialien aus dem Stand der Technik beispielsweise auf Basis von Acyrlharzen bekannt, die unter anderem zur Verbesserung der Verkratzungsbeständigkeit, Wärmeleitfähigkeit, mechanischen Belastbarkeit oder chemischen Resistenz etc. Glas- und/oder Keramik-Partikel enthalten. Die Partikel weisen eine Größe im Mikrometerbereich auf. Zur Anwendung kommen beispielsweise Glas-Mikrohohlkugeln (glas micro bubbles), wie sie in der US 4,767,726 der Minnesota Mining & Manufacturing Company beschrieben sind.

Die Produkte TC-Texx und TC-Well der Anmelderin stellen solche Beschichtungsmaterialien dar. Bei diesen Beschichtungen handelt es sich um lösungsmittelfreie Verbundwerkstoffe, bei denen mikroskopisch kleine Keramik-hohlkugeln in eine vorzugsweise elastische und atmungsaktive Dispersion eingebettet sind. Durch die Keramikhohlkugeln weisen die Beschichtungen eine hohe chemische Resistenz, hohe mechanische Belastbarkeit, dauerhafte Langlebigkeit, eine hohe Riß- und Versprödungsresistenz sowie hervorragende wärmetechnische Eigenschaften auf. Grundsätzlich kann davon ausgegangen werden, daß das Einbringen von Keramikkohlkugeln in Wandfarben aufgrund ihrer Eigenschaften die Kreation von Spezialeffekten ermöglicht, wodurch insgesamt neben Erhöhungen der Kratzfestigkeit und der Verbesserung der Antihafteigenschaften eine Qualitätssteigerung für Farben, Beschichtungen und sonstige Baumaterialien erreicht wird. Aufgrund der im Mikrometerbereich liegenden Größe der Keramikhohlkugeln besitzen diese Beschichtungen insbesondere eine nur sehr geringe Verschmutzungsneigung.

Neben den zuvor beschriebenen Beschichtungsmaterialien sind aus dem Stand der Technik Beschichtungsmaterialien bekannt, deren Oberflächen den sogenannten "Lotus-Effekt" zeigen. Diese Materialien bilden Oberflächenschichten mit nanoskaligen Strukturen aus. Aufgrund der nanoskaligen Oberfläche kann Schmutz und Wasser an dieser nicht anhaften und perlt ab.

Nachteiligerweise bleibt der Lotus-Effekt des Anstriches nur solange erhalten, wie die nanoskalige Struktur der Anstrichsoberfläche intakt ist. Wird die diese Struktur tragende Schicht der Beschichtung beispielsweise durch Umwelteinflüsse beliebiger Art oder mechanische Einwirkungen zerstört, weist der Anstrich auch keinen Lotus-Effekt mehr auf. Insbesondere eine stellenweise Störung der nanoskaligen Oberfläche führt zu einer besonders unschönen Verschmutzung der gestrichenen Oberfläche, während ungestörte Oberflächenbereiche weiterhin neu aussehen.

Ausgehend von dem beschriebenen Stand der Technik liegt der vorliegenden Erfindung die Aufgabe zugrunde, ein Beschichtungsmaterial mit gegenüber den bekannten Materialien verbesserten Eigenschaften zu schaffen.

Diese Aufgabe wird gelöst durch ein Beschichtungsmaterial mit einem Basisfluid, in dem Körperelemente dispergiert sind, welches dadurch gekennzeichnet ist, daß die Oberfläche der Körperelemente mit Nanopartikeln besetzt ist.

Gegenstände und Flächen, die mit dem erfindungsgemäßen Beschichtungsmaterial versehen sind, wie beispielsweise Fassaden von Gebäuden, Dächer und Mauerwerke, sowohl im Innenbereich als auch im Außenbereich, werden dauerhaft nicht mehr oder nur geringst verschmutzen. Auftreffende Schmutzpartikel liegen nur lose auf den behandelten Flächen und Gegenständen auf und werden durch die Einwirkung von Luftströmungen oder Wasser abgespült.

Die Nanopartikel sind vorzugsweise derart auf der Oberfläche der Körperelemente angeordnet, daß diese den sogenannten Lotus-Effekt aufweisen. Zu diesem Zweck werden die Nanopartikel gezielt ausgerichtet, so daß die Struktur der Oberfläche gezielt hergestellt bzw. beeinflußt werden kann. Vorteilhafterweise werden auf Basis der Nanotechnologie behandelte Oberflächen nicht mit einer geschlossenen Schicht versiegelt, sondern bleiben beispielsweise dampfdiffusionsoffen und lichtdurchlässig, während dagegen Wasser, Schmutzpartikel, Mikroben und energiereiche Strahlung, beispielsweise im Bereich von 500 nm bis 2500 nm, die eigentliche Oberfläche nicht erreichen. Die Energie von Sonnenlicht im Wellenlängenbereich von 500 nm bis 2500 nm wird nur stark reduziert in die Oberfläche eingebracht (maximal bis zu 20%), so daß sich das eigentliche Beschichtungsmaterial nur noch geringfügig aufwärmt. Auf diese Weise werden Dehnungsspannungen aufgrund des thermischen Verhaltens des Beschichtungsmaterials vermieden bzw. erheblich reduziert, wodurch die Haltbarkeit der Beschichtungen insbesondere im Bereich von Dachflächen und Fassaden erheblich verlängert wird. Des weiteren wird ein Aufheizen von mit dem erfindungsgemäßen Beschichtungsmaterial beschichteten Gebäuden weitgehend reduziert.

Bei den Körperelementen handelt es sich vorzugsweise um keramische Körperelemente, welche kristalline und/oder polykristalline Körperelemente sein können. Es ist ebenfalls denkbar, als Körperelemente glasartige Körperelemente zu verwenden. Die Körperelemente können eine beliebige Form aufweisen, bevorzugt sind allerdings wegen ihrer geringen Oberfläche kugelförmige Körperelemente. Werden Hohlkugeln verwendet, so besitzen diese in vorteilhafter Weise ein geringes Gewicht. Die Körperelemente weisen Größen im Mikrometerbereich auf.

Nach einer besonders bevorzugten Ausführungsform der Erfindung sind die Körperelemente Mikrohohlkugeln. Diese Glas-Mikrohohlkugeln haben gewichtsbezogen z. B. eine Zusammensetzung bestehend im wesentlichen aus 70 bis 80% SiO₂, 8 bis 15% CaO, 3 bis 8% NaO₂ und 2 bis 6% B₂O₃ und etwa 0,2 bis 1,5% SO₃, wobei sie ein CaO:Na₂O-Verhältnis von 1 bis 1,3 haben. Dabei bildet SO₃ das für die Herstellung dieser Mikrohohlkugeln erforderliche Blasmittel. Die US 4,767,726 beschreibt weitere Zuschlagstoffe, um in Abhängigkeit von dem Verwendungsgebiet der Glasmikrohohlkugeln die Eigenschaften derselben zu verändern bzw. zu verbessern. Aus der US 3,365,315 und 5,064,784 sind Verfahren zur Herstellung von Glas-Mikrohohlkugeln bekannt, welche das Hitzeschmelzen von Glas bei einer hohen Temperatur und das Abblasen in Form von Teilchen umfassen, während es mit einem Bläh- bzw. Treibmittel geschäumt wird. Die EP 0 601 594 B1 beschreibt ein Verfahren zur Herstellung insbesondere kristalliner Mikrohohlkugeln, die unter anderem auch als Füllstoffe in Farben- oder Feuerfestmaterialien verwendet werden, um unterschiedliche Bedürfnisse zu erfüllen. Je nach beabsichtigtem Einsatzgebiet kann es sich dabei um kristalline und/oder polykristalline Mikrohohlkugeln, keramische Mikrohohlkugeln oder Glasmikrohohlkugeln handeln. Bei dem erfindungsgemäßen Beschichtungsmaterial werden bevorzugt solche Mikrohohlkugeln eingesetzt, wie sie im zuvor genannten Stand der Technik offenbart wurden.

Die Oberfläche der Körperelemente ist mit Nanopartikeln besetzt. Diese weisen nach einer besonders bevorzugten Ausführungsform der Erfindung einen mittleren Durchmesser unter 200 nm, bevorzugt unter 100 nm und besonders bevorzugt unter 50 nm auf. Die Nanopartikel sind vorzugsweise nanoskalige Partikel der Gruppe bestehend aus Aluminiumoxyden, Aluminiumoxyhydraten, Titandioxyden und Zirkondioxyden. Des weiteren ist es möglich, daß die Nanopartikel aus Solen herstellbare nanoskalige Oxyde der Elemente der Gruppe bestehend aus Aluminium, Titan, Zirkonium, Tantal und Zinn sind. Es wird als vorteilhaft beschrieben, auch oberflächenmodifizierte Partikel einzusetzen oder z. B. eine Oberflächenmodifizierung nach der Deagglommeration vorzunehmen, da diese eine Stabilisierung gegen eine Reagglommeration bewirken.

Die mit Nanopartikeln besetzten Körperelemente sind vorzugsweise in eine organische, anorganische oder organisch-anorganische Matrix, insbesondere auf Basis von Acrylharzen, eingebracht. Acrylharze werden üblicherweise als Lösungen in organische Lösungsmitteln oder als wäßrige Dispersionen eingesetzt, beispielsweise für Außen- und Innenanstriche oder für die Lackierung von Papier, Holz, Metallen und anderen Werkstoffen. Die mit Nanopartikeln besetzten Körperelemente liegen fein dispergiert in der Matrix vor.

Wird die erfindungsgemäße Beschichtung als Anstrich auf eine Oberfläche aufgebracht, so bildet sich eine keramische Oberfläche aus, welche aus den mit Nanopartikeln besetzten Körperelementen gebildet wird. Durch die Auswahl eines geeigneten die Körperelemente bildenden Materials können zahlreiche Eigenschaften der Beschichtung, wie Versprödungsneigung, Dampfdurchlässigkeit, Brandverhalten, Haftungsfestigkeit, thermische Isolierung, etc. bestimmt werden. Die Oberfläche der Körperelemente ist aufgrund der dort angeordneten Nanopartikel nanostrukturiert, weshalb an ihr Schmutzpartikel, Wasser, etc. nicht anhaften können. Die Oberfläche der Beschichtung setzt sich aus nanostrukturierten Oberflächenbereichen der randseitigen Körperelemente der Beschichtung zusammen. Die gesamte Oberfläche der Beschichtung weist somit ebenfalls wie die Körperelemente eine nanostrukturierte Oberfläche auf, weshalb Verschmutzungen, Wasser etc. nicht anhaften können, und die Oberfläche im wesentlichen selbstreinigend ist.

Da nicht nur die Oberfläche der Beschichtung selbst nanostrukturiert ist, sondern vielmehr die Oberfläche der Körperelemente, deren Eigenschaften wie Härte, Stabilität, Haftung untereinander usw. einstellbar sind, weist die erfindungsgemäße Beschichtung weitaus größere Standzeiten als herkömmliche Beschichtungen mit Lotus-Effekt auf, da die Struktur der Beschichtung verschiedensten Einflüssen wie Temperaturwechseln, Regen, Frost, Schlageinwirkungen etc. erfolgreich widersteht.

Weitere Einzelheiten und Merkmale der Erfindungen ergeben sich aus der folgenden beispielhaften und nicht beschränkenden Beschreibung einer besonders bevorzugten Ausführungsform anhand der Figur.

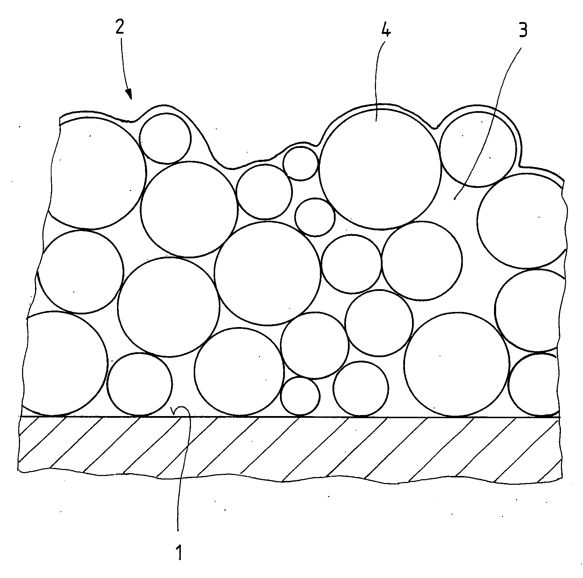

In Fig. 1 ist schematisch eine. Schnittansicht durch eine mit einer erfindungsgemäßen Beschichtung 1 versehenen Oberfläche 2 quer zur Oberfläche 2 dargestellt. Die Beschichtung 1 besitzt eine Matrix 3. Die Matrix 3 ist elastisch und atmungsaktiv. In ihr sind Mikro-Keramik-Hohlkugeln, im folgenden Bubbles 4 genannt, eingebettet. Bei den Bubbles 4 handelt es sich um mikroskopisch kleine, ultra-leichte Keramikhohlkugeln, welche ca. 50% der Bestandteile der Beschichtung bilden. Auf einer Beschichtungsfläche von etwa 1 m² sind rund 600 Millionen dieser Bubbles 4 angeordnet. Aufgrund der durch die Bubbles 4 unterbrochenen elastischen Matrix 3 weist die Beschichtung 1 selber sehr geringe thermische Ausdehnungskoeffizienten und eine hohe Temperaturwechselbeständigkeit auf. Durch geeignete Auswahl der Matrix 3 und durch die Tatsache, daß es sich bei den Bubbles 4 um keramische Elemente handelt, weist die Beschichtung eine sehr hohe Beständigkeit gegenüber Säuren, Salzen und deren Lösungen auf, wodurch sie gegenüber Umwelteinflüssen äußerst resistent ist. Werden als Werkstoff für die Bubbles 4 Keramiken auf Siliziumdioxydbasis ausgewählt, erhält die Beschichtung eine hohe Widerstandsfähigkeit gegenüber mechanischen Oberflächeneinwirkungen. Die Bubbles 4 sind entweder luftgefüllt oder weisen in ihrem Inneren ein Vakuum auf. Sie haben daher eine geringe Masse und eine geringe Wärmeleitfähigkeit.

Die Oberfläche der Bubbles 4 ist mit nanoskaligen Partikeln besetzt, deren Größe um einen Faktor zwischen 100 und 10000 kleiner ist als die der Bubbles 4. Die Nanopartikel bilden auf der Oberfläche der Bubbles 4 in bekannter Weise eine zum Erhalten des Lotus-Effektes erforderliche Struktur aus.

### Bezugszeichenliste

- 1: Oberfläche
- 2: Beschichtung
- 3: Matrix
- 4: Bubbles

## Patentansprüche

1. Beschichtungsmaterial mit einem Basisfluid, in dem Körperelemente dispergiert sind, **dadurch gekennzeichnet, daß** die Oberfläche der Körperelemente mit Nanopartikeln besetzt ist.

2. Beschichtungsmaterial nach Anspruch 1, **dadurch gekennzeichnet, daß** die Körperelemente keramische Körperelemente sind.

3. Beschichtungsmaterial nach Anspruch 1 oder 2, **dadurch gekennzeichnet, daß** die Körperelemente kristalline Körperelemente sind.

4. Beschichtungsmaterial nach einem der vorhergehenden Ansprüche, **dadurch gekennzeichnet, daß** die Körperelemente polykristalline Körperelemente sind.

5. Beschichtungsmaterial nach einem der vorhergehenden Ansprüche, **dadurch gekennzeichnet, daß** die Körperelemente glasartige Körperelemente sind.

6. Beschichtungsmaterial nach einem der vorhergehenden Ansprüche, **dadurch gekennzeichnet, daß** die Körperelemente im wesentlichen aus Natron-Borosilikatglas bestehen.

7. Beschichtungsmaterial nach einem der vorhergehenden Ansprüche, **dadurch gekennzeichnet, daß** die Körperelemente Mikrohohlkugeln sind.

8. Beschichtungsmaterial nach einem der vorhergehenden Ansprüche, **dadurch gekennzeichnet, daß** die Nanopartikel einen mittleren Durchmesser unter 200 nm, bevorzugt unter 100 nm und besonders bevorzugt unter 50 nm aufweisen.

9. Beschichtungsmaterial nach einem der vorhergehenden Ansprüche, **dadurch gekennzeichnet, daß** die Nanopartikel nanoskalige Partikel der Gruppe bestehend aus Aluminiumoxyden, Aluminiumoxydhydraten, Titandioxyden und Zirkondioxyden sind.

10. Beschichtungsmaterial nach einem der Ansprüche 1 bis 8, **dadurch gekennzeichnet, daß** die Nanopartikel aus Solen herstellbare nanoskalige Oxyde der Elemente der Gruppe bestehend aus Aluminium, Titan, Zirkonium, Tantal und Zinn sind.

11. Beschichtungsmaterial nach einem der vorhergehenden Ansprüche, **dadurch gekennzeichnet, daß** die mit Nanopartikeln besetzten Körperelemente in eine Lösung auf Basis von Acrylharz eingebracht sind.

12. Beschichtungsmaterial nach einem der vorhergehenden Ansprüche, **dadurch gekennzeichnet, daß** die Nanopartikel derart auf der Oberfläche der Körperelemente angeordnet sind, daß sich der Lotus-Effekt einstellt.
